# EUROPÄISCHE PATENTSCHRIFT

(11) **EP 2 031 370 B1**
(45) Veröffentlichungstag und Bekanntmachung des Hinweises auf die Patenterteilung: **07.12.2011**
(21) Anmeldenummer: 07115282.1
(22) Anmeldetag: 30.08.2007
(51) Int. Cl.: F01N 9/00, F01N 11/00, G05B 17/02, G05B 23/02, F02D 41/24, G01N 15/06

(54) **Abgassensor**
Exhaust gas sensor
Capteur de gaz d'échappement

(43) Veröffentlichungstag der Anmeldung: 04.03.2009
(73) Patentinhaber: ROBERT BOSCH GMBH, 70442 Stuttgart (DE)
(72) Erfinder: Strohmaier, Rainer, 70565, Stuttgart (DE); Handler, Torsten, 70435, Stuttgart (DE); Kamp, Bernhard, 71640, Ludwigsburg (DE); Schaenzlin, Katharina, 72108, Rottenburg-Obernau (DE); Schittenhelm, Henrik, 70182, Stuttgart (DE); Sturm, Andreas, 97959, Assamstadt (DE)

(56) Entgegenhaltungen:
- EP-A- 1 746 276
- EP-A2- 1 992 935
- WO-A-00/68557
- DE-A1-102005 016 132
- DE-A1-102005 040 790
- US-A1- 2005 268 601
- US-B1- 6 205 842

## Beschreibung

Die Erfindung betrifft ein Verfahren zur Bestimmung einer Masse von Partikeln oder eines Partikelmassenstroms oder zur Erkennung eines Partikelfilterdefekts in einem Abgasstrang einer Brennkraftmaschine, wobei in dem Abgasstrang der Brennkraftmaschine zumindest ein resistiver Partikelsensor angeordnet ist, dessen gemessene Signaländerung mit einer aus einem Motormodell ermittelten prognostizierten Signaländerung des Partikelsensors verglichen wird.

Ein derartiges Verfahren ist in der DE 10 2005 040 790 A1 angegeben. Bei diesem bekannten Verfahren wird eine Masse von Partikeln oder ein Partikelmassenstrom in einem Abgasstrom einer Brennkraftmaschine mittels eines resistiven Partikelsensors bestimmt. Hierbei wird bei der Bewertung des von dem Partikelsensor bereit gestellten Partikelsensorsignals der Abgasstrom berücksichtigt.

Weitere Verfahren, die sich mit der Überwachung von Abgasen einer Brennkraftmaschine befassen, sind in der EP 1746 276 A und der WO 00/68557 A gezeigt.

Ein resistiver Partikelsensor ist auch in der DE 10133 384 A1 beschrieben. Der Partikelsensor ist aus zwei ineinander greifenden, kammartigen Elektroden aufgebaut, die zumindest teilweise von einem Schutzrohr überdeckt sind, das auch als Fanghülse zur Verbesserung der Ablagerung von Partikeln dient. Lagern sich Partikel aus dem Abgas einer Brennkraftmaschine an dem Partikelsensor ab, so führt dies zu einer auswertbaren Änderung der Impedanz des Partikelsensors, aus der auf die Menge angelagerter Partikel und somit auf die Menge im Abgas mitgeführter Partikel geschlossen werden kann.

Dabei beeinflussen diese Größen sowohl die Anlagerung der Partikel an dem Sensor wie auch die gemessene Impedanz des Sensors.

In der nicht vorveröffentlichten Offenlegungsschrift DE 10 2005 040 790 A1 ist ein Verfahren zum Betreiben eines Sensors zum Erfassen von Partikeln in einem Abgasstrom beschrieben. Dabei wird zumindest ein Maß für den Abgasstrom am Partikelsensor ermittelt und bei der Bewertung des vom Partikelsensor bereitgestellten Partikelsensorsignals das Maß für den Abgasstrom berücksichtigt.

Weitere Einflussgrößen auf die Querempfindlichkeiten der Sensoren werden bei dem beschriebenen Verfahren nicht berücksichtigt. Bei der Kompensation der Querempfindlichkeiten des Partikelsensors tritt das Problem auf, dass die Signaländerungen des Partikelsensors sehr klein sind. Es kann eine vergleichsweise lange Zeit benötigt werden, um eine hinreichend Menge von Partikel zu sammeln, damit eine für das Motorsteuergerät auswertbare Signaländerung zustande kommt. Aus diesem Grund kann eine zeitnahe Kompensation der Querempfindlichkeiten teilweise nicht oder nur sehr ungenau durchgeführt werden. Die Dynamik des Partikelsensors und somit seines Ausgangssignals kann bei sich ändernden Betriebssituationen der Brennkraftmaschine nicht ausreichend sein, um den wechselnden Betriebsbedingungen zu folgen. Einer quantifizierbaren Signaländerung kann in einem solchen Fall somit nicht ein einzelner Wert, beispielsweise ein Abgasvolumenstrom, zugeordnet werden, sondern ihr muss eine Historie von sich während der Messzeit ändernden Einflussparametern zugeschrieben werden.

In der nicht vorveröffentlichten Offenlegungsschrift EP 1 746 276 A2 ist ein Verfahren zur Überwachung eines Abgasgrenzwertes eines Verbrennungsmotors mittels einer Motorsteuerung beschrieben, wobei die Motorsteuerung mindestens einen Abgassensor aufweist und ein Fehlersignal bei Überschreitung des Abgasgrenzwertes abgegeben wird. Dabei werden die für den gegenwärtigen Fahrzustand vorhergesagten Emissionen mit Hilfe eines Motormodells ermittelt und mit dem Signal des Abgassensors oder einem daraus hergeleiteten Vergleichswert für die Emission verglichen. Der Abgassensor kann ein sammelnder Partikelsensor sein. Das Verfahren ermöglicht die Abgasüberwachung bei gegenüber standardisierten Fahrzyklen zur Festlegung der Grenzwerte abweichenden Betriebsbedingungen des Verbrennungsmotors.

[0006a] In der Offenlegungsschrift DE 10 2005 016 132 A1 ist ein Messverfahren zur Diagnostik eines Partikelfilters beschrieben, bei dem die Messwerte verschiedener Partikelsensoren stromaufwärts und stromabwärts des Partikelfilters verglichen werden.

Es ist Aufgabe der Erfindung, ein Verfahren bereitzustellen, welches eine genaue Bestimmung der in dem Abgas einer Brennkraftmaschine mitgeführten Partikelmenge mit Hilfe eines resistiven Partikelsensors ermöglicht.

Die Aufgabe wird gemäß Anspruch 1 dadurch gelöst, dass die prognostizierte Signaländerung des Partikelsensors unter Berücksichtigung von Einflussgrößen auf Querempfindlichkeiten des Partikelsensors korrigiert wird. Dabei wird es insbesondere bei der Ermittlung der prognostizierten Signaländerung des Partikelsensors möglich, dass auch bei dynamischen Betriebspunktwechseln der Brennkraftmaschine, die schneller als das Ansprechen des Partikelsensors erfolgen, eine Kompensation der Querempfindlichkeiten erfolgen kann, da die Korrektur auch für kleine, also während eines gerade durchlaufenen Betriebspunktes der Brennkraftmaschine prognostizierte Signaländerungen durchgeführt werden kann. Da die prognostizierten Signaländerungen aus einem Kennlinienfeld des Motormodells ermittelt werden, können diese für sehr kurze Zeiten und somit einzelnen Betriebspunkten der Brennkraftmaschine zuordenbare Messintervalle mit den dadurch bedingten sehr kleinen prognostizierten Signaländerungen bestimmt werden.

Mit einem realen Partikelsensor können unter einigen Betriebsbedingungen aufgrund der mangelnden Dynamik des Partikelsensors und aufgrund von Messwertschwankungen solch kleine Signaländerungen nicht auswertbar sein. Dabei ist eine Korrektur der Querempfindlichkeiten bei der gemessenen Signaländerung, beispielsweise zum Zeitpunkt des Vergleiches mit der prognostizierten Signaländerung, zur Berücksichtigung der momentanen Querempfindlichkeiten sinnvoll. Die gemessenen und prognostizierten Signaländerungen können nach den bekannten Methoden der Gradientenmethode und der Auslösemethode ausgewertet werden. Im Falle der Gradientenmethode entspricht die Signaländerung der Anstiegsgeschwindigkeit dl/dt des Sensorstroms. Bei der Auslösemethode wird überwacht, ob das Sensorsignal eine vorgegebene Schwelle überschreitet und der Zeitpunkt des Überschreitens der Schwelle als Auslösezeitpunkt des Partikelsensors definiert.

Die wesentlichen Einflussparameter auf das Messverhalten heutiger Partikelsensoren können dadurch kompensiert werden, dass zur Korrektur der gemessenen Signaländerung und/oder der prognostizierten Signaländerung des Partikelsensors die Einflussgrößen auf die Querempfindlichkeiten des Partikelsensors Abgastemperatur und/oder Temperatur des Partikelsensors und/oder Abgasvolumenstrom und/oder der Einfluss der gasförmigen Abgasbestandteile Stickoxide, Kohlenwasserstoffe und/oder Wasserdampf berücksichtigt werden. Statt dem Abgasvolumenstrom kann auch die Abgasgeschwindigkeit verwendet werden. Abhängig von dem jeweils verwendeten Sensorkonzept können jedoch auch weitere Einflussgrößen einbezogen werden.

Für die Auswertung der gemessenen und der prognostizierten Sensorsignale kann es vorgesehen sein, dass bei überschreiten einer vorgegebenen Stromschwelle oder unterschreiten einer vorgegebenen Widerstandsschwelle die gemessene Signaländerung und/oder die prognostizierte Signaländerung mit einer vorgegebenen Auslöseschwelle verglichen werden und bei Erreichen der Auslöseschwelle die gemessene Signaländerung mit der prognostizierten Signaländerung verglichen wird. Die Methode ermöglicht es, digitale Informationen "Schwelle erreicht / Schwelle nicht erreicht" zu einem bestimmten Zeitpunkt, vorzugsweise des Auslösezeitpunktes, zu vergleichen.

In einer bevorzugten Ausgestaltung der Erfindung ist es vorgesehen, dass aus einem von dem Motormodell prognostizierten Partikelmassenstrom in einem Anlagerungsmodell ein an dem Partikelsensor prognostizierter angelagerter Partikelmassenstrom unter Berücksichtigung der Einflussgrößen auf die Querempfindlichkeiten Temperatur des Partikelsensors, Abgastemperatur und/oder Abgasvolumenstrom ermittelt wird und dass durch Integration aus dem prognostizierten angelagerten Partikelmassenstrom eine prognostizierte angelagerte Masse und über ein Leitfähigkeitsmodell eine prognostizierte Signaländerung des Partikelsensors ermittelt wird. Das Motormodell gibt den für die momentane Betriebssituation der Brennkraftmaschine zu erwartenden und dem Partikelsensor zugeführten Partikelmassenstrom aus. In dem Anlagerungsmodell wird ermittelt, wie viele der prognostizierten, vorbeigeführten Partikel sich an dem Partikelsensor anlagern. Dabei berücksichtigt das Anlagerungsmodell, dass die Masse der je Zeiteinheit aus dem prognostizierten Partikelmassenstrom angelagerten Partikel abhängig von den momentanen Einflussparametern Temperatur des Partikelsensors, Abgastemperatur und Abgasvolumenstroms ist. Da die Prognose für sehr kurze Messintervalle durchführbar ist, kann so der in der momentanen Betriebsituation der Brennkraftmaschine an den Partikelsensor angelagerte Partikelmassenstrom bestimmt werden. Durch die Integration wird die über einen längeren Zeitraum bei unterschiedlichen Betriebsbedingungen an den Partikelsensor angelagerter Masse von Partikeln ermitteln, welcher bei korrekter Prognose und Funktion des Partikelsensors der tatsächlich an dem Partikelsensor angelagerten Partikelmasse entspricht. Durch das Leitfähigkeitsmodell wird die prognostizierte angelagerte Masse in ein entsprechendes Signal des Partikelsensors umgerechnet, womit ein Vergleich mit dem gemessenen Signal des Partikelsensors möglich wird.

In einer weiteren nicht unter die Ansprüche fallenden Ausgestaltung ist es vorgesehen, dass aus dem von dem Motormodell prognostizierten Partikelmassenstrom in dem Anlagerungsmodell eine prognostizierte differentielle Signaländerung des Partikelsensors unter Berücksichtigung der Einflussgrößen auf die Querempfindlichkeiten des Partikelsensors Temperatur des Partikelsensor, Abgastemperatur und/oder Abgasvolumenstrom ermittelt wird und dass durch Integration der prognostizierten differentiellen Signaländerung die prognostizierte Signaländerung des Partikelsensors bestimmt wird. Bei dieser Ausgestaltung wird im Gegensatz zu der zuvor beschriebenen Variante die schwer bestimmbare Größe prognostizierter angelagerter Partikelmassenstrom nicht verwendet, sondern das Anlagerungsmodell ermittelt unter Berücksichtigung der genannten Querempfindlichkeiten direkt eine den momentanen Betriebsbedingungen der Brennkraftmaschine entsprechende differentielle Signaländerung. Daraus wird durch Integration die mit der gemessenen Signaländerung vergleichbare prognostizierte Signaländerung über mehrere Betriebspunkte ermittelt. Der Vorteil der Ausgestaltung liegt darin, dass das Anlagerungsmodell durch Messung der Signaländerung eines Partikelsensors im Abgas einer Brennkraftmaschine, welche mit konstanten Betriebsparametern betrieben wird, kalibriert werden kann. Dies kann entsprechend für verschiedene Betriebspunkte der Brennkraftmaschine erfolgen.

Dadurch, dass der Einfluss der aktuellen Temperatur des Partikelsensors auf die Leitfähigkeit des Partikelsensors in dem Leitfähigkeitsmodell oder zusätzlich in einer ersten Temperaturkorrekturstufe zur Bestimmung der prognostizierten Signaländerung berücksichtigt wird oder dass der Einfluss der aktuellen Temperatur in einer zweiten Temperaturkorrektur zur Bestimmung der gemessenen Signaländerung berücksichtigt wird, kann die prognostizierte Signaländerung direkt mit der gemessenen Signaländerung verglichen werden. Neben der angelagerten Masse an Partikeln auf dem Partikelsensor wird die Leitfähigkeit des Partikelsensors wesentlichen durch die momentane Temperatur des Partikelsensors und die Temperatur der angelagerten Partikel bestimmt. Es kann entweder die aktuelle Temperatur des Partikelsensors bei der Bestimmung der prognostizieren Signaländerung berücksichtigt werden oder die prognostizierte Signaländerung wird für eine festgelegte Temperatur des Partikelsensors bestimmt und die gemessene Signaländerung wird auf diese festgelegte Temperatur umgerechnet. Zusätzlich zu der Temperatur des Partikelsensors ist es auch denkbar, entsprechend weitere Einflussgrößen auf die Leitfähigkeit des Partikelsensors zu berücksichtigen.

Wird das Verfahren an Betriebspunkten der Brennkraftmaschine durchgeführt, an welchen die Masse der Partikel oder der Partikelmassenstrom mit hoher Genauigkeit gemessen oder prognostiziert werden können, kann die Genauigkeit und Zuverlässigkeit des Verfahrens deutlich verbessert werden. Weiterhin ist es denkbar, solche günstigen Betriebsbedingungen bei aus den Messergebnissen abgeleiteten Entscheidungen entsprechend den jeweiligen Anwendungen gesondert zu gewichten.

Eine bevorzugte Erfindungsvariante sieht vor, dass in Abhängigkeit von einer auf dem Partikelsensor angelagerten Partikelmasse und/oder der Abgastemperatur und/oder der Temperatur des Partikelsensors und/oder des Abgasvolumenstroms und/oder des prognostizierten Partikelmassenstroms und/oder eines gemessenen Partikelmassenstroms ein Gewichtungsfaktor bestimmt wird, mit welchem der prognostizierte angelagerte Partikelmassenstrom oder die prognostizierte differentielle Signaländerung korrigiert werden. Damit wird berücksichtigt, dass eine an dem Partikelsensor vorbei tretende Partikelmasse zu unterschiedlichen Zeitpunkten während eines Messzyklus unterschiedlich starke Beiträge zur Signalausbildung liefert, wie dies insbesondere bei der Auswertung nach der Auslösemethode der Fall sein kann. Dabei trägt eine unmittelbar nach der Regeneration des Partikelsensors angelagerte Partikelmasse weniger stark zur Auslösung bei als eine Partikelmasse, die kurz vor dem Auslösen des Partikelsensors angelagert wird.

Es ist vorgesehen, dass das Verfahren bei der Onboard-Diagnose (OBD) eines Partikelfilters im Abgasstrang der Brennkraftmaschine eingesetzt wird, wobei aus dem mit dem Motormodell prognostizierten Partikelmassenstrom und einem Grenzfiltermodell ein prognostizierter Partikelmassenstrom-Grenzwert, der dem Anlagerungsmodell zugeführt wird, bestimmt wird, wobei in einer Vergleichsstufe die prognostizierte Signaländerung des Partikelsensors mit der gemessenen Signaländerung des Partikelsensors verglichen werden und wobei auf einen defekten Partikelfilter geschlossen wird, wenn die gemessene Signaländerung des Partikelsensors größer ist als die prognostizierte Signaländerung. Der Partikelsensor ist dabei in Abgasrichtung nach dem zu überwachenden Partikelfilter angeordnet. Das in dem Grenzfiltermodell hinterlegte Rückhaltevermögen für Partikel entspricht dem Rückhaltevermögen eines Partikelfilters, der gerade noch den OBD-Grenzwert in einem gesetzlich vorgeschriebenen Fahrzyklus einhält. Die prognostiziere Signaländerung gibt nach dem beschriebenen Verfahren einen Grenzwert für die gemessene Signaländerung in Abhängigkeit der tatsächlich durchlaufenen Betriebspunkten der Brennkraftmaschine aus. Liegt die gemessene Signaländerung und somit die tatsächlich am Partikelsensor angelagerte Masse an Partikeln unterhalb der für den Grenzfilter prognostizierten Werte, so kann auf einen intakten Partikelfilter geschlossen werden. Überschreitet hingegen das gemessene Sensorsignal die prognostizierte Signaländerung, so kann auf einen defekten Partikelfilter geschlossen werden, da mehr Partikel zu dem Partikelsensor gelangt sind, als nach dem Partikelfilter zulässig ist.

Die Aussagesicherheit für eine Erkennung des defekten Partikelfilters lässt sich dadurch erhöhen, dass auf einen defekten Partikelfilter geschlossen wird, wenn in mehreren aufeinander folgenden Messzyklen die gemessene Signaländerung des Partikelsensors größer ist als die prognostizierte Signaländerung.

In einer bevorzugten Ausführungsvariante der Erfindung ist es vorgesehen, dass der von dem Motormodell prognostizierte Partikelmassenstrom nach Multiplikation mit einem vorgegebenen Vektor von Rückhaltefaktoren für den Partikelfilter als ein Vektor von prognostizierten Partikelmassenströmen dem Anlagerungsmodell zugeführt wird, daraus ein Vektor von prognostizierten Signaländerungen berechnet wird und nach Vergleich des Vektors von prognostizieren Signaländerungen mit der gemessenen Signaländerung ein Rückhaltefaktor für den Partikelfilter bestimmt wird. Auf Basis des bestimmten Rückhaltefaktors kann darauf geschlossen werden, ob ein defekter Partikelfilter vorliegt. Die durch Multiplikation mit dem Vektor gebildeten Werte unterscheiden sich untereinander dadurch, dass sie unterschiedlich stark von dem besten Schätzwert des prognostizierten Partikelmassenstroms aus dem Motormodell abweichen. Durch den Vergleich der durch den Vektor erhaltenen Einzelwerte an prognostizierten Signaländerungen mit der gemessenen Signaländerung lassen sich die besten Einzelwerte im Vektor der angenommenen Rückhaltefaktoren ermitteln, auf deren Basis die Aussage über den Schädigungsgrad des Partikelfilters erfolgt. Dabei kann der tatsächliche Rückhaltefaktor durch Interpolation der benachbarten, am ehesten die gemessene Signaländerung vorhersagenden Rückhaltefaktoren bestimmt werden. Es ist nach dieser Methode nicht erforderlich, alle relevanten Einflussgrößen auf die Querempfindlichkeiten des Partikelsensors wie Abgasvolumenstrom, Temperatur des Partikelsensors oder Partikelmassenstrom zeitabhängig für das Integrationsintervall aufzuzeichnen, es muss lediglich ein von Speicherumfang wesentlich kleinerer Vektor der prognostizierten Signaländerung mitgeschrieben werden.

In einer weiteren Anwendung des Verfahrens ist es vorgesehen, dass das Verfahren zur Anpassung eines Emissionskennfeldes des Motormodells zur Bestimmung der prognostizierten Masse von Partikeln oder des prognostizierten Partikelmassenstroms eingesetzt wird, wobei die prognostizierte Signaländerung des Partikelsensors mit der gemessenen Signaländerung verglichen wird und wobei bei einer Abweichung zwischen der prognostizierten Signaländerung und der gemessenen Signaländerung eine Korrektur des Emissionskennfeldes des Motormodells erfolgt. Anhand der prognostizierten Masse von Partikeln beziehungsweise des prognostizieren Partikelmassenstroms kann eine Beladungsprognose eines Partikelfilters durchgeführt werden. Die Korrektur des Emissionskennfeldes erfolgt dadurch, dass dort abgelegte Partikelkonzentrationen oder Partikelmassenströme erhöht oder abgesenkt werden. Dadurch können zum Beispiel Driften über die Lebensdauer der Brennkraftmaschine, beispielsweise aufgrund von Einspritzdüsendriften, erfasst und ausgeglichen werden.

Eine einfache, mit geringem Rechenaufwand umsetzbare Anpassung des Emissionskennfeldes lässt sich dadurch erreichen, dass die Korrektur des Motormodells dadurch erfolgt, dass alle Werte des Emissionskennfeldes des Motormodells mit einem Adaptionsfaktor multipliziert werden, wobei der Adaptionsfaktor aus dem Verhältnis zwischen der gemessenen Signaländerung und der prognostizierten Signaländerung bestimmt wird.

Die Genauigkeit der Anpassung des Emissionskennfeldes lässt sich verbessern, indem die Korrektur des Motormodells dadurch erfolgt, dass Werte des Emissionskennfeldes des Motormodells an Betriebspunkten der Brennkraftmaschine korrigiert werden, die in einem vorherigen Zeitraum seit Beginn eines Messzyklus angefahren wurden. Auf diese Weise können für verschiedene Betriebsbedingungen der Brennkraftmaschine unterschiedliche Korrekturfaktoren in das Emissionskennfeld eingebracht werden.

Eine weitere Steigerung der Genauigkeit lässt sich dadurch erreichen, dass die Korrektur des Motormodells dadurch erfolgt, dass Werte des Emissionskennfeldes des Motormodells an Betriebspunkten der Brennkraftmaschine korrigiert werden, indem sie mit einer Funktion korrigiert werden, die in einem Suchalgorithmus bestimmt wird, der das Motormodell so lange korrigiert, bis die gemessene Signaländerung und die prognostizierte Signaländerung übereinstimmen.

Ist es vorgesehen, dass der von dem Motormodell prognostizierte Partikelmassenstrom nach Multiplikation mit einem vorgegebenen Vektor von Adaptionsfaktoren als ein Vektor von prognostizierten Partikelmassenströmen dem Anlagerungsmodell zugeführt wird, daraus ein Vektor von prognostizierten Signaländerungen berechnet wird und nach Vergleich des Vektors von prognostizieren Signaländerungen mit der gemessenen Signaländerung ein Adaptionsfaktor für das im Motormodell hinterlegte Emissionskennfeld bestimmt wird, so kann die Adaption des Emissionskennfeldes mit geringem benötigten Speicherbedarf durchgeführt werde, da die in einem Integrationsintervall angefahrenen Betriebspunkte mit den zugehörigen Abgasvolumenströmen, Temperaturen und Partikelmassenströmen nicht mehr zeitabhängig aufgezeichnet werden müssen. Es genügt, den vom Speicherbedarf deutlich geringeren Vektor der prognostizierten Signaländerung mitzuschreiben. Dies macht sich insbesondere bei der Adaption des Emissionskennfeldes des Motormodells, bei dem das Emissionskennfeld so lange variiert wird, bis die prognostizierte und die gemessene Signaländerung übereinstimmen, bemerkbar, da durch dieses iterative Verfahren ein besonders hoher Speicherbedarf vorliegt.

### Zeichnungen

Die Erfindung wird im Folgenden anhand der in den Figuren dargestellten Ausführungsbeispiele näher erläutert. Es zeigen:
Figur 1 ein Ausgangssignal eines resistiven Partikelsensors,
Figur 2 ein Ablaufschema zur Überwachung eines Partikelfilters,
Figur 3 ein vereinfachtes Ablaufschema zur Überwachung des Partikelfilters,
Figur 4 ein Ablaufschema zur Überwachung des Partikelfilters mittels einer Auslösemethode,
Figur 5 ein Ablaufschema zur Anpassung eines Motormodells,
Figur 6 ein Ablaufschema mit Temperaturkorrektur eines gemessenen Sensorsignals,
Figur 7 ein weiteres Ablaufschema zur Überwachung des Partikelfilters mittels der Auslösemethode,
Figur 8 ein Ablaufschema zur Korrektur einer prognostizierten Signaländerung des Partikelsensors.

### Beschreibung der Ausführungsbeispiele

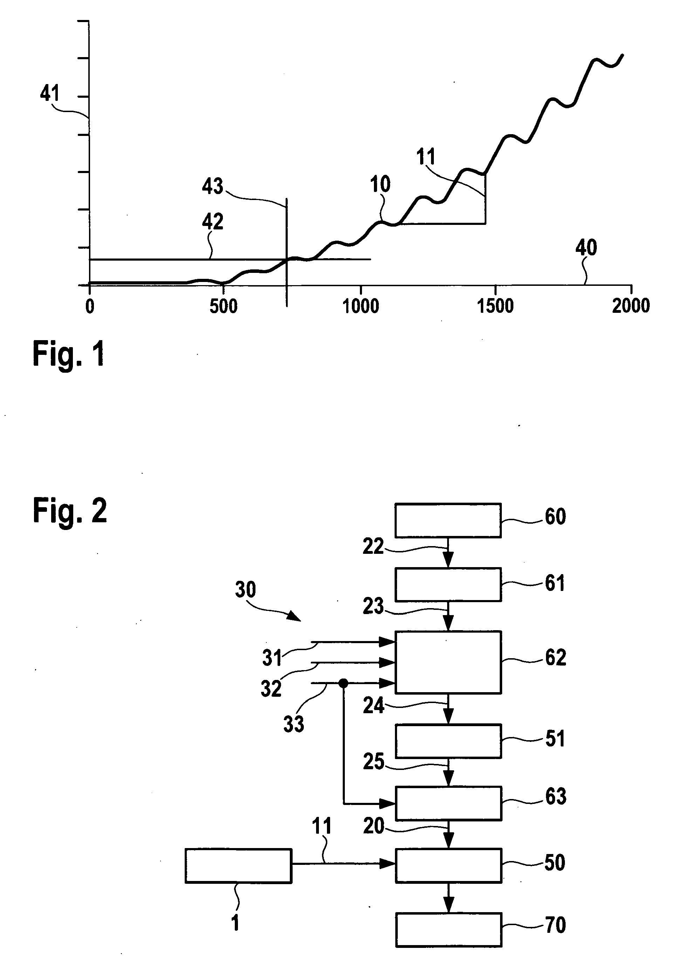

Figur 1 zeigt das Ausgangssignal eines, hier nicht dargestellten, resistiven Partikelsensors 1, wie er im Abgaskanal einer Brennkraftmaschine verwendet wird, um den Beladungszustand eines Diesel-Partikelfilters festzustellen oder dessen Funktion für eine Onboard-Diagnose zu überwachen. Der Partikelsensor 1 weist zwei kammartige ineinander greifende Elektroden auf, die dem Abgasstrom ausgesetzt sind. Lagern sich Rußpartikel ab, steigt die Leitfähigkeit zwischen den Elektroden und bei Anlegen einer elektrischen Spannung an den Partikelsensor 1 ist ein Strom messbar. Die abgelagerte Partikelmasse kann aus der Höhe des Stroms festgestellt werden. In der Figur 1 ist ein gemessenes Sensorsignal 10 entlang einer Zeitachse 40 auf einer Stromachse 41 abgetragen. Durch die zunehmende Beladung des Sensors steigt das gemessene Sensorsignal 10 an. Schwankungen des gemessenen Sensorsignals treten durch eine Querempfindlichkeit des Partikelsensors 1 mit der Temperatur auf. Neben der absoluten Höhe des Stromes durch den Partikelsensor 1, der durch das gemessene Sensorsignal 10 erfasst wird, kann auch eine über einen festgelegten Zeitraum erfolgte gemessene Signaländerung 11 zur Bewertung der Beladung des Partikelsensors 1 dienen. Nach einem Freibrennen des Partikelsensors 1 führt eine Beladung zunächst nicht zu einem messbaren Stromfluss, da die abgelagerten Partikel keinen zusammenhängenden Strompfad zwischen den Elektroden bilden. Üblicherweise wird daher eine Auslöseschwelle 42 festgelegt, ab der das gemessene Sensorsignal 10 bewertet wird. Diese Auslöseschwelle 42 wird zu einem Auslösezeitpunkt 43 nach einem Freibrennen des Partikelsensors 1 erreicht und stellt ein Maß für die Ablagerungsrate am Partikelsensor 1 dar. Diese Variante der Auswertung des Ausgangssignals des Partikelsensors 1 wird Auslösemethode genannt.

Figur 2 zeigt ein Ablaufschema zur Überwachung des Diesel-Partikelfilters mittels des Partikelsensors 1. In einem Motormodell 60 wird aufgrund aktueller Betriebsparameter der Brennkraftmaschine ein prognostizierter Partikelmassenstrom 22 bestimmt, der einem Grenzfiltermodell 61 zugeführt wird. In dem Grenzfiltermodell 61 wird modelliert, welcher Anteil des prognostizierten Partikelmassenstroms 22 in einem grenzwertigen Partikelfilter zurückgehalten wird und welcher Anteil ihn durchdringt und als ein prognostizierter Partikelmassenstrom-Grenzwert 23 verlässt. Zur Modellierung des Anlagerungsverhaltens der im Abgas vorhandenen Partikel an dem Partikelsensor 1 dient ein Anlagerungsmodell 62, dem als Einflussgrößen 30 auf die Querempfindlichkeiten ein Abgasvolumenstrom 31, eine Abgastemperatur 32 und eine Temperatur 33 des Partikelsensors 1 zugeführt werden. Statt des Abgasvolumenstroms 31 kann auch eine Abgasgeschwindigkeit am Ort des Partikelsensors 1 verwendet werden. Aus den Einflussgrößen 30 und dem prognostizierten Partikelmassenstrom-Grenzwert 23 bestimmt das Anlagerungsmodell 62 einen prognostizierten angelagerten Partikelmassenstrom 24, der in einer Integrationsstufe 51 zu einer prognostizierten angelagerten Masse 25 integriert wird. Die prognostizierte angelagerte Masse 25 wird in einem Leitfähigkeitsmodell 63 unter Berücksichtigung der Temperatur 33 zu einer prognostizierten Signaländerung 20 umgerechnet. Das Leitfähigkeitsmodell 63 berücksichtigt dabei zum einen die aufgrund der Ausbildung der Partikelbelegung auftretenden Strompfade und den daraus folgenden elektrischen Widerstand der Anordnung als auch die Temperaturabhängigkeit des spezifischen elektrischen Widerstands des Schichtmateriales. Die prognostizierte Signaländerung 20, die wegen der Verwendung des Grenzfiltermodells 61 die für einen grenzwertigen Partikelfilter zu erwartende Signaländerung darstellt, wird in einer Vergleichsstufe 50 mit der gemessenen Signaländerung 11 verglichen. Ist die gemessenen Signaländerung 11 höher als die prognostizierte Signaländerung 20, wird auf einen defekten Partikelfilter geschlossen und ein Diagnosesignal 70 erzeugt. Es kann dabei vorgesehen sein, dass erst bei mehreren aufeinander folgen Diagnosen eines defekten Partikelfilters das Diagnosesignal 70 erzeugt wird, um Fehldiagnosen zu vermeiden.

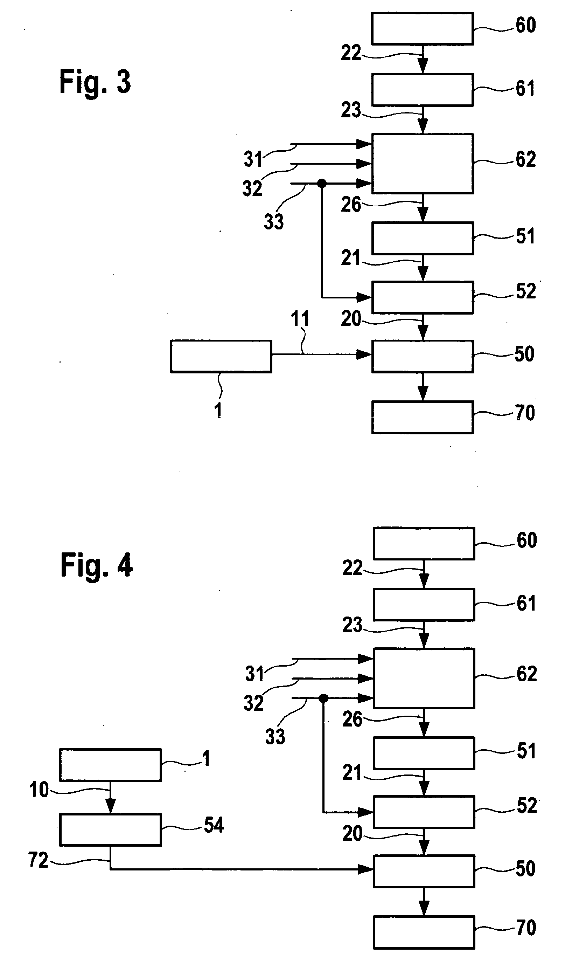

In Figur 3 ist ein gegenüber Figur 2 vereinfachtes nicht unter die Ansprüche fallendes Ablaufschema für die Diagnose des Partikelfilters gezeigt. Auch hier wird der im Motormodell 60 bestimmte prognostizierte Partikelmassenstrom 22 dem Grenzfiltermodell 61 zugeführt, der prognostizierte Partikelmassenstrom-Grenzwert 23 bestimmt, und dieser dem Anlagerungsmodell 62 zugeführt. In dem Ablagerungsmodell 62 wird jedoch direkt eine prognostizierte differentielle Signaländerung 26 bestimmt, die in der Integrationsstufe 51 zu einer prognostizierten integralen Signaländerung 21 integriert wird. In einer ersten Temperaturkorrekturstufe 52 wird aus der prognostizierten integralen Signaländerung 21 die prognostizierte Signaländerung 20 bestimmt, die in der Vergleichsstufe 50 mit der am Partikelsensor 1 gemessenen Signaländerung 11 verglichen wird.

Die Verwendung einer Auslösemethode zur Bewertung der Tauglichkeit des Partikelfilters ist in Figur 4 dargestellt. Das am Partikelsensor 1 gemessene Sensorsignal 10 wird einer Schwellwertstufe 54 zugeführt, in der bewertet wird, inwiefern ein vorgegebener Schwellwert von dem gemessenen Sensorsignal 10 erreicht wird. Ist der Schwellwert erreicht, gibt die Schwellwertstufe 54 ein Zeitsignal 72 an die Vergleichsstufe 50, in der der Vergleich zwischen der prognostizierten Signaländerung 20 und dem gemessenen Sensorsignal 10, das dem Schwellwert entspricht, vorgenommen wird. Ist die prognostizierte Signaländerung 20, hierbei kann es sich auch um die prognostizierte Signaländerung 20 seit dem letzten Freibrennen handeln, kleiner als der Schwellwert, wird auf einen defekten Partikelfilter geschlossen. In dieser Ausführungsform erfolgt der Vergleich in der Vergleichsstufe 50 nur einmalig nach jedem Freibrennen des Partikelsensors 1, so dass der Programmablauf verkürzt wird.

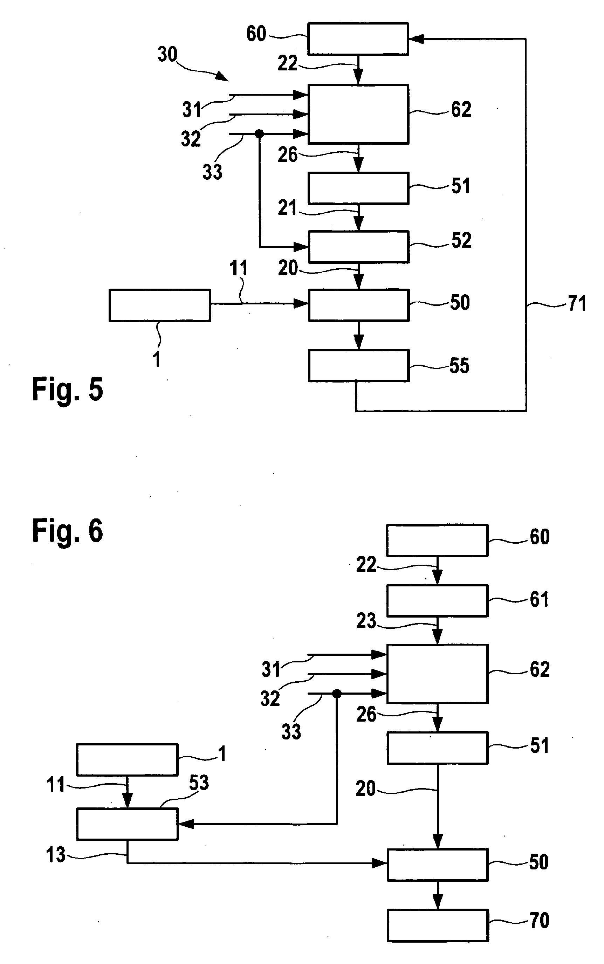

Zusätzlich zu der Anwendung in der Onboard-Diagnose von Partikelfiltern kann das erfindungsgemäße Verfahren auch vorteilhaft für die Anpassung des Motormodells 60 zur präziseren Bestimmung des prognostizierten Partikelmassenstroms 22 verwendet werden. Diese Anwendung ist in Figur 5 dargestellt. In dem Motormodell 60 wird der prognostizierte Partikelmassenstrom 22 bestimmt und dem Anlagerungsmodell 62 zugeführt, in dem er unter Berücksichtigung der Einflussgrößen 30 auf die Querempfindlichkeiten Abgasvolumenstrom 31, Abgastemperatur 32 und Temperatur 33 des Partikelsensors 1 in die prognostizierte differentielle Signaländerung 26 umgerechnet wird. Durch Integration in der Integrationsstufe 51 wird die prognostizierte integrale Signaländerung 21 bestimmt, aus der in der ersten Temperaturkorrekturstufe 52 unter Berücksichtigung der Temperatur 33 die prognostizierte Signaländerung 20 bestimmt wird. In der Vergleichsstufe 50 wird die prognostizierte Signaländerung 20 mit der gemessenen Signaländerung 11 des Partikelsensors 1 verglichen und abhängig vom Ergebnis des Vergleichs in einer Anpassungsstufe 55 ein Adaptionsfaktor 71 bestimmt, der in das Motormodell 60 eingeht und der so ausgelegt ist, dass im nächsten Durchlauf des Verfahrens der Unterschied zwischen der prognostizierte Signaländerung 20 und der gemessenen Signaländerung 11 des Partikelsensors 1 verringert ist, dass das Motormodell 60 die realen Verhältnisse somit besser modelliert. Der Adaptionsfaktor 71 kann in einer einfachen Ausführungsform das Verhältnis von gemessener Signaländerung 11 und prognostizierter Signaländerung 20 sein. Es kann jedoch auch vorgesehen sein, nur jene Betriebspunkte eines Emissionskennfelds im Motormodell 60 zu ändern, die im vorangegangenen Fahrzyklus angefahren wurden.

Eine besonders gute Adaption des Emissionskennfelds im Motormodell 60 wird erreicht, wenn zeitaufgelöst die aus den Betriebsparametern der Brennkraftmaschine folgenden Einflussgrößen 30 auf die Querempfindlichkeit gespeichert werden und die Adaption so lange erfolgt, bis die prognostizierte Signaländerung 20 und die gemessenen Signaländerung 11 übereinstimmen. Dies kann jedoch einen hohen Speicherplatz erfordern. Dies kann vermieden werden, indem mit dem Motormodell 60 nicht nur ein einzelner Wert des prognostizierten Partikelmassenstroms 22 bestimmt wird, sondern ein Vektor von solchen Werten, die jeweils in einem festen Verhältnis zu dem prognostizierten Partikelmassenstrom 22 stehen. Die folgenden Berechnungen werden jeweils mit allen Werten des Vektors durchgeführt. In der Vergleichsstufe wird ermittelt, welcher Wert aus dem Vektor am besten mit dem gemessenen Wert übereinstimmt. Auch kann eine Interpolation zwischen Werten aus dem Vektor durchgeführt werden. Hierdurch wird ermittelt, bei welchem Verhältnis der gemessene und der prognostizierte Wert am besten übereinstimmen. Vorteilhaft ist an dieser Ausführung, dass der Speicherbedarf nur durch die Anzahl der Elemente des Vektors bestimmt wird.

In den bisher dargestellten Ausführungsformen der Erfindung wird die Temperaturabhängigkeit des Widerstands des Partikelsensors 1 in den prognostizierten Werten berücksichtigt, um den Vergleich mit gemessenen Werten zu ermöglichen. In der Ausführung nach Figur 6 wird demgegenüber die Temperaturkorrektur am gemessenen Signal vorgenommen. Wie in Figur 4 wird auf Basis der Betriebsparameter der Brennkraftmaschine und dem im Motormodell 60 abgelegten Emissionskennfeld nach Verarbeitung im Grenzfiltermodell 61 und im Anlagerungsmodell 62 die prognostizierte differentielle Signaländerung 26 bereitgestellt. Aus dieser wird in der Integrationsstufe 51 die, in diesem Fall nicht mit der Temperatur 33 korrigierte, prognostizierte Signaländerung 20 erzeugt. Die vom Partikelsensor 1 bereit gestellte gemessene Signaländerung 11 wird in einer zweiten Temperaturkorrekturstufe 53, die die Temperatur 33 des Partikelsensors 1 berücksichtigt, in eine gemessene temperaturkorrigierte Signaländerung 13 umgewandelt, die in der Vergleichsstufe 50 mit der prognostizierten Signaländerung 20 verglichen wird. In diesem Fall findet der Vergleich daher mit für eine wählbare Temperatur charakteristischen Signalen statt.

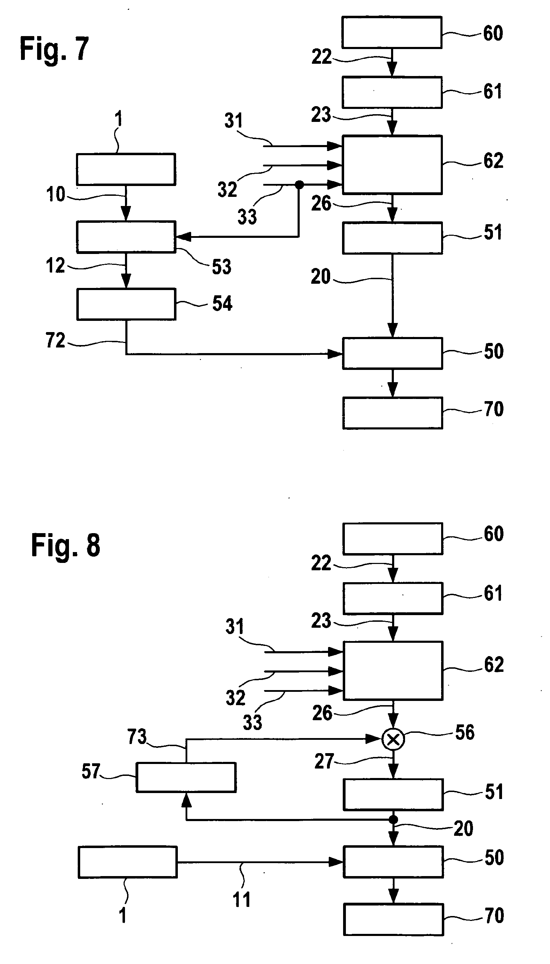

In Figur 7 ist eine Ausführungsform der Onboard-Diagnose gemäß der Auslösemethode dargestellt, bei der die Temperaturkorrektur am gemessenen Sensorsignal 10 vorgenommen wird. Wie in Figur 6 wird auf Basis des Motormodells 60 die prognostizierte Signaländerung 20 erzeugt. Der Partikelsensor 1 erzeugt das gemessene Sensorsignal 10, das der zweiten Temperaturkorrekturstufe 53 zugeführt wird, die ein gemessenes temperaturkorrigiertes Sensorsignal 12 erzeugt, welches der Schwellwertstufe 54 zugeführt wird. Erreicht das gemessene temperaturkorrigierte Sensorsignal 12 den vorgegebenen Schwellwert, wird das Zeitsignal 72 erzeugt, das die Vergleichsstufe 50 veranlasst, das gemessene temperaturkorrigierte Sensorsignal 12 mit der prognostizierten Signaländerung 20 für den gesamten Messzyklus zu vergleichen. Ist das gemessene temperaturkorrigierte Sensorsignal 12 höher als die prognostizierte Signaländerung 20, wird auf einen defekten Partikelfilter geschlossen und das Diagnosesignal 70 ausgelöst.

Zur Berücksichtigung einer weiteren Querempfindlichkeit des Partikelsensors 1 kann es vorgesehen sein, in der Prognose die Anlagerung von Partikeln auf einem gerade freigebrannten Partikelsensor 1 anders zu wichten als die Anlagerung an einem bereits mit Partikeln belegten Partikelsensor 1. Eine solche Ausführungsform ist in der Figur 8 dargestellt. Wie bereits in Figur 7 dargestellt, wird auf Basis des Motormodells 60 die prognostizierte differentielle Signaländerung 26 ermittelt. Aus der prognostizierten Signaländerung 20 seit dem letzten Freibrennen, die die Beladung des Partikelsensors 1 repräsentiert, wird in einer Wichtungsstufe 57 diese Beladung bewertet und ein Gewichtungsfaktor 73 ausgegeben, der dem unterschiedlichen Anlagerungsverhalten bei unterschiedlicher Beladung des Partikelsensors 1 Rechnung trägt. In einer Multiplikationsstufe 56 wird die prognostizierte differentielle Signaländerung 26 mit dem Gewichtungsfaktor 73 multipliziert und die gewichtete prognostizierten differentielle Signaländerung 27 berechnet, aus der in der Integrationsstufe 51 die prognostizierten Signaländerung 20 seit dem letzten Freibrennen berechnet wird. Diese wird in der Vergleichsstufe 50 mit der gemessenen Signaländerung 11 des Partikelsensors 1 verglichen. In einer Erweiterung der Ausführungsform können weitere Einflussfaktoren auf den Gewichtungsfaktor 73 wie der Abgasvolumenstrom 31, die Abgastemperatur 32, die Temperatur 33 des Partikelsensors 1 oder ein Partikelmassenstrom im Abgaskanal berücksichtigt werden. In einer weiteren Ausführungsform kann der Gewichtungsfaktor statt auf die prognostizierte differentielle Signaländerung 26 auf den prognostizierten Partikelmassenstrom 22 angewendet werden.

## Patentansprüche

1. Verfahren zur Onboard-Diagnose (OBD) eines Partikelfilters im Abgasstrang einer Brennkraftmaschine mittels zumindest eines im Abgasstrang stromabwärts nach dem Partikelfilter angeordneten resistiven Partikelsensors (1), **dadurch gekennzeichnet, dass**
- anhand eines von einem Motormodell (60) bereitgestellten prognostizierten Partikelmassenstroms (22) und
- anhand eines Grenzfiltermodells (61), in welchem modelliert wird, welcher Anteil des prognostizierten Partikelmassenstroms (22) in einem grenzwertigen Partikelfilter zurückgehalten wird und welcher Anteil ihn durchdringt und als prognostizierter Partikelmassenstrom-Grenzwert (23) verlässt, und
- anhand eines Anlagerungsmodells (62) zur Modellierung des Anlagerungsverhaltens der im Abgas vorhandenen Partikel an dem Partikelsensor (1), dem ein Abgasvolumenstrom (31), eine Abgastemperatur (32) und eine Temperatur des Partikelsensors (1) zugeführt werden, sowie
- anhand eines Leitfähigkeitsmodels (63) eine prognostizierte Signaländerung (20) ermittelt wird, die wegen der Verwendung des Grenzfiltermodells (61) die für einen grenzwertigen Partikelfilter zu erwartende Signaländerung darstellt,
- dass in einer Vergleichsstufe (50) die prognostizierte Signaländerung (20) mit einer gemessenen Signaländerung (11) des Partikelsensors (1) verglichen wird und
- dass auf einen defekten Partikelfilter geschlossen wird, wenn die gemessene Signaländerung (11) höher als die prognostizierte Signaländerung (20) ist, wobei
- die gemessene Signaländerung (11) des Partikelsensors (1) und/oder die prognostizierte Signaländerung (20) des Partikelsensors (1) unter Berücksichtigung von Einflussgrößen (30) auf Querempfindlichkeiten des Partikelsensors (1) korrigiert wird.

2. Verfahren nach Anspruch 1, **dadurch gekennzeichnet, dass** als Einflussgrößen (30) die Abgastemperatur (32) und/oder Temperatur (33) des Partikelsensors (1) und/oder Abgasvolumenstrom (31) und/oder der Einfluss der gasförmigen Abgasbestandteile Stickoxide, Kohlenwasserstoffe und/oder Wasserdampf berücksichtigt werden

3. Verfahren nach Anspruch 1, **dadurch gekennzeichnet, dass** der Einfluss der aktuellen Temperatur (33) des Partikelsensors (1) auf die Leitfahigkeit des Partikelsensors (1) in dem Leitfähigkeitsmodell (63) und zusätzlich in einer ersten Temperaturkorrekturstufe (52) zur Bestimmung der prognostizierten Signaländerung (20) berücksichtigt wird.

4. Verfahren nach Anspruch 1, **dadurch gekennzeichnet, dass** der Einfluss der aktuellen Temperatur (33) des Partikelsensors (1) in einer zweiten Temperaturkorrektur (53) zur Bestimmung der gemessenen Signaländerung (11) berücksichtigt wird.

5. Verfahren nach einem der vorangegangenen Ansprüche, **dadurch gekennzeichnet, dass** das Verfahren an Betriebspunkten der Brennkraftmaschine durchgeführt wird, an welchen die Masse der Partikel oder der Partikelmassenstrom mit hoher Genauigkeit gemessen oder prognostiziert werden können.

6. Verfahren nach Anspruch 1, **dadurch gekennzeichnet, dass** in Abhängigkeit von einer auf dem Partikelsensor (1) angelagerten Partikelmasse und/oder der Abgastemperatur (32) und/oder der Temperatur (33) des Partikelsensors (1) und/oder des Abgasvolumenstroms (31) und/oder des prognostizierten Partikelmassenstroms (22) und/oder eines gemessenen Partikelmassenstroms ein Gewichtungsfaktor bestimmt wird, mit welchem der prognostizierte angelagerte Partikelmassenstrom (24) oder die prognostizierte differentielle Signaländerung (26) korrigiert werden.

7. Verfahren nach Anspruch 1, **dadurch gekennzeichnet, dass** auf einen defekten Partikelfilter geschlossen wird, wenn in mehreren aufeinander folgenden Messzyklen die gemessene Signaländerung (11) des Partikelsensors (1) größer ist als die prognostizierte Signaländerung (20).

8. Verfahren nach Anspruch 1, **dadurch gekennzeichnet, dass** eine Anpassung eines Emissionskennfeldes des Motormodells (60) zur Bestimmung der prognostizierten Masse von Partikeln oder des prognostizierten Partikelmassenstroms (22) vorgesehen wird, wobei die prognostizierte Signaländerung (20) des Partikelsensors (1) mit der gemessenen Signaländerung (11) verglichen wird und wobei bei einer Abweichung zwischen der prognostizierten Signaländerung (20) und der gemessenen Signaländerung (11) eine Korrektur des Emissionskennfeldes des Motormodells (60) erfolgt.

## Claims

1. Method for the on-board diagnosis (OBD) of a particle filter in the exhaust tract of an internal combustion engine by means of at least one resistive particle sensor (1) arranged in the exhaust tract downstream of the particle filter, **characterized in that**,
- on the basis of a predicted particle mass flow (22) provided by an engine model (60), and
- on the basis of a limit filter model (61) in which it is modelled what fraction of the predicted particle mass flow (22) is retained in a limit-value particle filter and what fraction passes through and exits said limit-value particle filter as a predicted particle mass flow limit value (23), and
- on the basis of an accumulation model (62) for modelling the accumulation behaviour of the particles present in the exhaust gas on the particle sensor (1), to which model are supplied an exhaust-gas volume flow (31), an exhaust-gas temperature (32) and a temperature of the particle sensor (1), and
- on the basis of a conductivity model (63), a predicted signal change (20) is determined which, owing to the use of the limit filter model (61), represents the signal change to be expected for a limit-value particle filter,
- **in that**, in a comparison step (50), the predicted signal change (20) is compared with a measured signal change (11) of the particle sensor (1), and
- **in that** it is inferred that the particle filter is defective if the measured signal change (11) is greater than the predicted signal change (20), wherein
- the measured signal change (11) of the particle sensor (1) and/or the predicted signal change (20) of the particle sensor (1) are/is corrected taking into consideration influential variables (30) that influence cross-sensitivities of the particle sensor (1).

2. Method according to Claim 1, **characterized in that** the exhaust-gas temperature (32) and/or temperature (33) of the particle sensor (1) and/or exhaust-gas volume flow (31) and/or the influence of the gaseous exhaust-gas constituents nitrogen oxides, hydrocarbons and/or water vapour are taken into consideration as influential variables (30).

3. Method according to Claim 1, **characterized in that** the influence of the present temperature (33) of the particle sensor (1) on the conductivity of the particle sensor (1) is taken into consideration in the conductivity model (63) and additionally in a first temperature correction step (52) for determining the predicted signal change (20).

4. Method according to Claim 1, **characterized in that** the influence of the present temperature (33) of the particle sensor (1) is taken into consideration in a second temperature correction (53) for determining the measured signal change (11).

5. Method according to one of the preceding claims, **characterized in that** the method is carried out at operating points of the internal combustion engine at which the mass of the particles or the particle mass flow can be measured or predicted with high accuracy.

6. Method according to Claim 1, **characterized in that**, as a function of a particle mass accumulated on the particle sensor (1) and/or the exhaust-gas temperature (32) and/or the temperature (33) of the particle sensor (1) and/or the exhaust-gas volume flow (31) and/or the predicted particle mass flow (22) and/or a measured particle mass flow, a weighting factor is determined with which the predicted accumulated particle mass flow (24) or the predicted differential signal change (26) are corrected.

7. Method according to Claim 1, **characterized in that** it is inferred that the particle filter is defective if the measured signal change (11) of the particle sensor (1) is greater than the predicted signal change (20) in multiple successive measurement cycles.

8. Method according to Claim 1, **characterized in that** an adaptation of an emissions characteristic map of the engine model (60) for determining the predicted mass of particles or the predicted particle mass flow (22) is provided, wherein the predicted signal change (20) of the particle sensor (1) is compared with the measured signal change (11), and wherein a correction of the emissions characteristic map of the engine model (60) takes place in the event of a deviation between the predicted signal change (20) and the measured signal change (11).

## Revendications

1. Procédé de diagnostic embarqué (OBD) d'un filtre à particules dans la chaîne de gaz d'échappement d'un moteur à combustion interne à l'aide d'au moins un capteur de particules (1) résistif disposé dans la chaîne de gaz d'échappement en aval après le filtre à particules, **caractérisé en ce que** :
- à l'aide d'un débit massique de particules (22) pronostiqué et mis à disposition pour chaque modèle de moteur (60) ; et
- à l'aide d'un modèle de filtrage limite (61) dans lequel sont modélisées une partie du débit massique de particules (22) pronostiqué qui est retenue dans un filtre à particules à valeur limite et une partie qui le traverse et le quitte sous la forme de valeur limite de débit massique de particules (23) pronostiqué ; et
- à l'aide d'un modèle de dépôt (62), un débit massique de gaz d'échappement (31), une température des gaz d'échappement (32) et une température du capteur de particules (1) sont amenés au capteur de particules (1) pour modéliser le comportement de dépôt des particules présentes dans les gaz d'échappement ;
- à l'aide d'un modèle de conductivité (63), une variation de signal (20) pronostiquée est calculée et celle-ci représente, en raison de l'utilisation du modèle de filtrage limite (61), la variation de signal attendue pour un filtre à particules à valeur limite ;
- que lors d'une étape de comparaison (50), la variation de signal (20) pronostiquée est comparée à une variation de signal (11) mesurée du capteur de particules (1) ; et
- que la présence d'un filtre à particules défectueux est déduite lorsque la variation de signal (11) mesurée est supérieure à la variation de signal (20) pronostiquée, la variation de signal (11) mesurée du capteur de particules (1) et/ou la variation de signal (20) pronostiquée du capteur de particules (1) étant corrigées en prenant en compte l'ampleur des influences (30) du capteur de particules (1) sur les sensibilités transversales.

2. Procédé selon la revendication 1, **caractérisé en ce que** l'ampleur des influences (30) prises en compte comprend la température des gaz d'échappement (32) et/ou la température (33) du capteur de particules (1) et/ou le débit volumique de gaz d'échappement (31) et/ou l'influence des composants gazeux des gaz d'échappement tels les oxydes d'azote, les hydrocarbures et/ou la vapeur d'eau.

3. Procédé selon la revendication 1, **caractérisé en ce que** l'influence de la température (33) réelle du capteur de particules (1) sur la conductivité du capteur de particules (1) est prise en compte dans le modèle de conductivité (63) ainsi que dans une première étape de correction de la température (52) pour déterminer la variation de signal (20) pronostiquée.

4. Procédé selon la revendication 1, **caractérisé en ce que** l'influence de la température (33) réelle du capteur de particules (1) est prise en compte lors d'une deuxième correction de la température (53) pour déterminer la variation de signal (11) mesurée.

5. Procédé selon l'une quelconque des revendications précédentes, **caractérisé en ce que** le procédé est mis en oeuvre au niveau de certains points fonctionnels du moteur à combustion interne au niveau desquels la masse des particules ou le débit massique des particules peuvent être mesurés ou pronostiqués avec une plus grande précision.

6. Procédé selon la revendication 1, **caractérisé en ce qu'**un facteur de pondération permettant de corriger le débit massique des particules (24) déposées ou la différence de variation de signal (26) pronostiquée est déterminé en fonction d'une masse de particules déposée sur le capteur de particules (1) et/ou de la température des gaz d'échappement (32) et/ou de la température (33) du capteur de particules (1) et/ou du débit volumique de gaz d'échappement (31) et/ou du débit massique de particules (22) pronostiqué et/ou d'un débit massique de particules mesuré.

7. Procédé selon la revendication 1, **caractérisé en ce que** l'on décide de la présence d'un filtre à particules défectueux lorsque la variation de signal (11) mesurée du capteur de particules (1) est supérieure, sur plusieurs cycles de mesure successifs, à la variation de signal (20) pronostiquée.

8. Procédé selon la revendication 1, **caractérisé en ce qu'**une adaptation d'une caractéristique d'émission du modèle de moteur (60) est prévue pour déterminer la masse de particules pronostiquée ou le débit massique de particules (22) pronostiqué, la variation de signal (20) pronostiquée du capteur de particules (1) étant comparée à la variation de signal (11) mesurée et une correction de la caractéristique d'émission du modèle de moteur (60) étant réalisée en présence d'un écart entre la variation de signal (20) pronostiquée et la variation de signal (11) mesurée.
